# EUROPEAN PATENT SPECIFICATION

(11) **EP 3 532 209 B1**
(45) Date of publication and mention of the grant of the patent: **06.07.2022**
(21) Application number: 17713006.9
(22) Date of filing: 23.03.2017
(51) Int. Cl.: B05B 15/65, F16L 3/237, F16L 41/02

(54) **ADAPTER FOR FLUID DISPENSING SYSTEM**
ADAPTER FÜR FLÜSSIGKEITSAUSGABESYSTEM
ADAPTATEUR POUR SYSTÈME DE DISTRIBUTION DE FLUIDE

(30) Priority: 27.10.2016 DE 102016012920
(43) Date of publication of application: 04.09.2019
(73) Proprietor: Husqvarna AB, 561 82 Huskvarna (SE)
(72) Inventor: KISTLER, Michael, 89185 Hüttisheim (DE); MAAG, Markus, 89081 Ulm (DE)
(74) Representative: Finkele, Rolf
(86) International application number: PCT/EP2017/056958
(87) International publication number: WO 2018/077486

(56) References cited:
- EP-A1- 1 004 263
- WO-A1-2015/087805
- US-A- 5 395 054
- US-A1- 2011 308 192
- US-A1- 2014 117 178

## Description

### TECHNICAL FIELD

The present invention relates to a fluid dispensing system, and more particularly to an adapter for the fluid dispensing system.

### BACKGROUND

Fluid dispensing systems are well known in the art and are generally used for cleaning and watering applications. Fluid dispensing systems such as sprayers are generally connected with a fluid supply tube to supply fluid to be dispensed. The sprayers may be connected to the fluid supply tube by a known means like threads with sealing mechanisms. Typically, the sprayer and the fluid supply tube are designed to match one another for coupling. The sprayer is generally provided with a nozzle, also known as a spraying nozzle, and an inlet.

The inlet is connected to the fluid supply tube, and the spraying nozzle sprays the fluid. Further, the inlet of the sprayer may have a predefined length for maintaining the pressure of the water or fluid passing through the sprayer. Typically, while utilising the fluid dispensing systems, a user holds the sprayer and positions the spraying nozzle in a direction where fluid dispensing is desired for cleaning and/or watering applications. As a result, reach and application of the fluid dispensing system may be limited by the reach of the user.

The Chinese Patent CN201558777U (hereafter referred as the Patent '777) relates to a Sprayer lengthened handle. The lengthening handle includes a reinforcing rib. A straight groove is present around the end of the lengthening handle. The straight groove is connected with the connecting pipe nipple with straight groove at the inner side, and it is located by the bolt. One side of the connecting pipe nipple is connected with the water pipe connector. The fixing device is composed of the connecting plate and the connecting belt is set at the other end. The upper part of the front end of the lengthening handle is equipped with a grab handle. The front end of the lengthening handle is connected with the coupling tube and equipped with a step bolt. The coupling tube is installed in the lengthening handle and is located by the step bolt. The side end of the coupling tube has an elbow and is connected with a water pipe.

The water pipe is connected with the water pipe connector. One end of the valve has a spray beam connector and the other end of the valve is connected with the coupling tube. The water pipe is connected with the water pipe connector. One end of the valve has a spray beam connector and the other end of the valve is connected with the coupling tube. Though the Patent '777 provides the sprayer lengthened handle, the coupling tube and the valve in the sprayer lengthened handle may not be coupleable with all sorts of sprayers and handles used in the garden watering systems. Document US 5 395 054 discloses a fluid dispensing system according to the prior art.

Therefore, in light of the foregoing, there is a need for an improvement in garden watering devices.

### SUMMARY

In view of the above, it is an objective of the present invention to solve or at least reduce the problems discussed above. The objective is at least partially achieved with a fluid dispensing system according to claim 1.

### BRIEF DESCRIPTION OF THE DRAWINGS

The invention will be described in more detail with reference to the enclosed drawings, wherein:
FIG. **1** shows a perspective view a fluid dispensing system, according to an embodiment of the present invention;
FIG. **2** shows a magnified view of a portion "A" of the FIG. **1** according to an embodiment of the present invention;
FIG. **3** shows an exploded view of an assembly shown in FIG. **2****,** according to an embodiment of the present invention;
FIG. **4** shows a cross sectional view of an adapter of the fluid dispensing system shown in FIG. **1****,** according to an embodiment of the present invention;
FIG. **5** shows a perspective view of a clamp of the fluid dispensing system shown in FIG. **1****,** according to an embodiment of the present invention;
FIG. **6** shows a perspective view of the clamp shown in FIG. **5** holding a hose and an elongated member, according to an embodiment of the present invention; and
FIG. **7** shows a perspective view of the clamp shown in FIG. **5** holding the fluid regulator valve and the elongated member, according to an embodiment of the present invention.

### DESCRIPTION OF EMBODIMENTS

The present invention will be described more fully hereinafter with reference to the accompanying drawings, in which example embodiments of the invention incorporating one or more aspects of the present invention are shown. This invention is defined by the appended claims. For example, one or more aspects of the present invention can be utilized in other embodiments and even other types of structures and/or methods. In the drawings, like numbers refer to like elements. Wherever possible, the same reference numbers will be used throughout the drawings to refer to the same or the like parts.

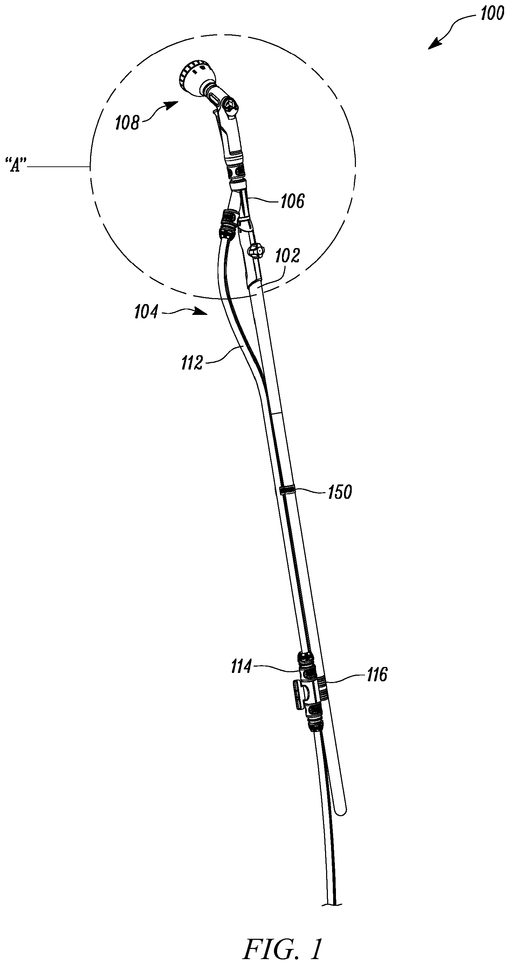

FIG. **1** illustrates a perspective view of a fluid dispensing system **100,** according to an embodiment of the present disclosure. In the illustrated embodiment, the fluid dispensing system **100** is a garden watering tool. It is to be understood that the fluid dispensing system **100** may find its applications other than the garden watering tool. Therefore, it is not meant to be limiting the scope of the present invention. The fluid dispensing system **100** may include, but not limited to, an elongated member **102,** a fluid supplying device **104,** an adapter **106,** and a fluid outlet device **108**. The elongated member **102** may be employed to extend along the length of the fluid dispensing system **100**. The fluid dispensing system **100** may be extended in an upright direction, or a downward direction or sidewise direction during working of the fluid dispensing system **100**. The elongated member **102** includes, but not limited to, a combi-switch handle or an ordinary pole or a telescopic tube.

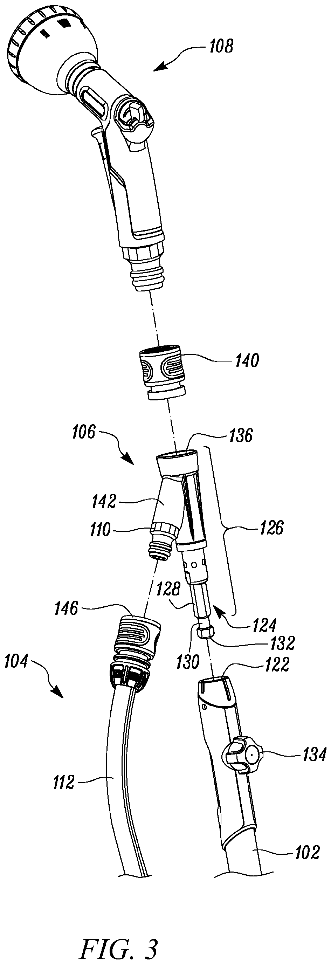

The fluid supplying device **104** may include, but not limited to, a twist safe connection nipple **110** (shown in FIG. **3**) and a hose **112**. The hose **112** is adapted to connect with the twist safe connection nipple **110**. The fluid supplying device **104** is fluidly connected to the fluid outlet device **108** through the adapter **106**. The fluid from a source (not shown) flows through an assembly of the hose **112**, the twist safe connection pipe 110 and the adapter **106** to the fluid outlet device **108**. The source for the fluid supply device may include, but not limited to, a tap, a pump, a reservoir, or any other source of fluid known in the art.

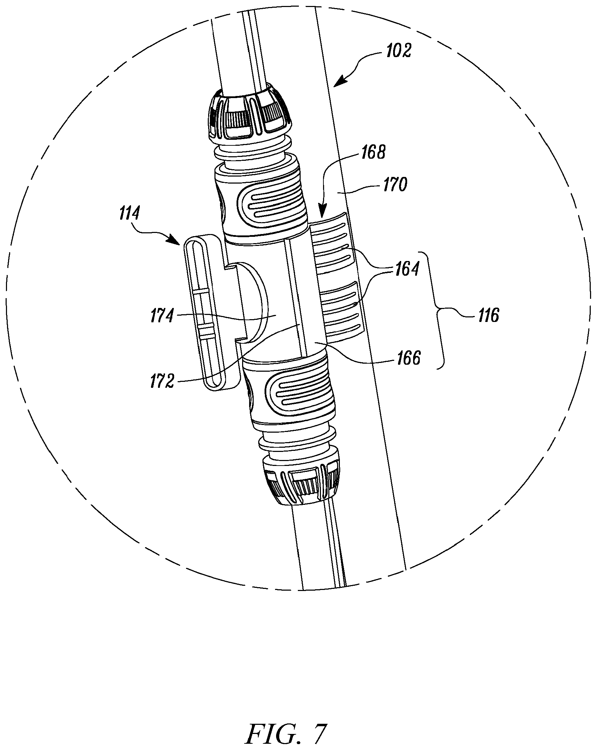

The fluid supplying device **104** further includes a fluid regulator valve **114** and a clamp **116** (explained in FIG. **7**) for holding the fluid regulator valve **114**. The fluid regulator valve **114** is adapted to vary the fluid flow by adjusting the fluid regulator valve **114**. The fluid regulator valve **114** is also configured to cut-off the fluid flow through the hose **112**. The fluid regulator valve **114** and the hose **112** are held together with the elongated member **102** using the clamp **116**. The clamp **116** provides a firm support to the fluid regulator valve **114** during operation of the fluid dispensing system **100**. The fluid flows through the fluid supplying device **104** and thereafter to the fluid outlet device **108**.

In an embodiment, the fluid outlet device **108** is a fluid spraying device. The fluid outlet device **108** may include, but not limited to, a spray gun, a nozzle, a shower, or any other fluid outlet spraying device known in the art. The fluid outlet device **108** may posses different flow patterns including a soft spray, a bubble-jet spray, a hard jet and a flat jet, or any other flow pattern known in the art. In the illustrated embodiment of FIG. **1**, the fluid outlet device **108** is sealingly coupled with the adapter **106** and the elongated member **102**.

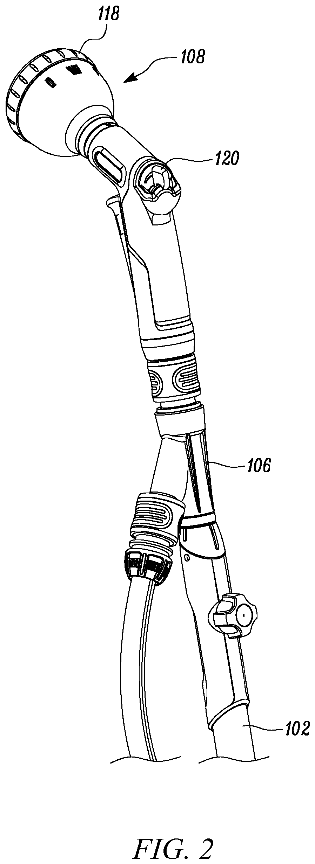

FIG. **2** illustrates the magnified view of the portion "**A**" shown in the FIG. 1. The magnified view of the portion "**A**" provides a better understanding of an upper portion of the elongated member **102** connected with the adapter **106**, the fluid outlet device **108** and the fluid supplying device **104**. The fluid flows out through the fluid outlet device **108**. The fluid outlet device **108** may include a sprayer head **118** to provide different flow patterns, an indicator (not shown) to control the water flow rate, and a pulse trigger **120** for facilitating locking of the fluid outlet device **108**. The locking of the pulse trigger **120** may facilitate the fluid flow without interruption. The fluid outlet device **108** may perform spraying operations associated with the fields including, but not limited to, irrigation, cleaning, spraying fertilizers, spraying pesticides, spraying herbicides, or another spraying operation known in the art.

FIG. **3** illustrates the exploded view of the assembly of the portion "**A**" shown in FIG. **2**, according to an embodiment of the present invention. The elongated member **102** includes an opening **122** for receiving a first end **124** of a body portion **126** of the adapter **106**. The opening **122** receives substantial portion of the first end **124** of the body portion **126** for coupling the adapter **106** with the elongated member **102**.

In an embodiment, the first end **124** of the body portion **126** of the adapter **106** is a solid end which is detachably connected to the opening **122** of the elongated member **102**. The first end **124** is configured with a plurality of flat surfaces **128** and a stepped portion **130** along with a stopper **132**. During coupling of the adapter **106** with the elongated member **102**, the first end **124** of the adapter **106** is inserted into the opening **122** of the elongated member **102**. A knob **134** is provided in the elongated member **102** configured to contact the plurality of flat surfaces **128** for coupling and locking the adapter **106** with the elongated member **102**. The knob **134** is threadably coupled on the elongated member **102**. Rotation of the knob **134** in a predetermined direction couples and locks the first end **124** of the adapter **106** with the elongated member **102**. The adapter **106** can be displaced longitudinally for slight adjustment of height of the adapter **106** with respect to the elongated member **102**. Thus, the adapter **106** is configured to connect with any of the elongated member **102** having varied lengths.

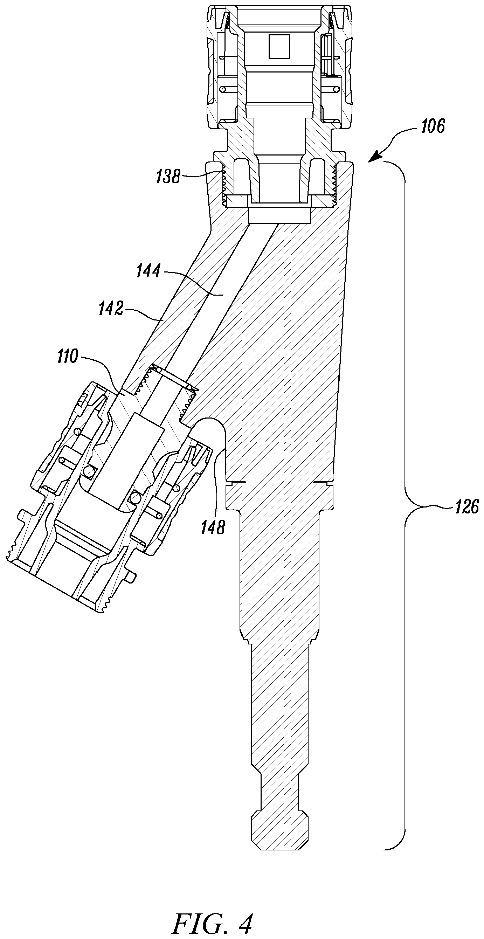

The body portion **126** of the adapter **106** further includes a second end **136**. The second end **136** is opposite to the first end **124**. The second end **136** of the body portion **126** is a hollow cylindrical portion and is provided with connecting means such as, but not limited to, threads **138** (shown in FIG. **4**). The connecting means enable a sealing connection between the fluid outlet device **108** and the adapter **106.** The second end **136** of the body portion **126** of the adapter **106** may be provided with a torsion stable connection **140** for providing torsional stability to the connection between the fluid outlet device **108** and the adapter **106.** In an embodiment, the torsion stable connection **140** may be an integral part of the adapter **106.** In another embodiment, the torsion stable connection **140** may be a non-integral part of the adapter **106,** preferably there will be a threaded connection of the connection **140** and the adapter **106.** In a possible embodiment the connection **140** is in principal shaped in form of a hose connector, as for example shown with the connecting end **146.**

Further, the adapter **106** is configured to couple with the hose **112** of the fluid supplying device at an inlet portion **142** of the adapter. The inlet portion **142** is configured in the body portion **126** of the adapter **106.** The inlet portion **142** defines a passage **144** (shown in FIG. **4**) for the fluid flow and extends till the second end **136** of the body portion **126.** The hose **112** is fluidly connected to the inlet portion **142** of the body portion **126** for supplying fluid through the passage **144** to the fluid outlet device **108.** In an embodiment, the hose **112** may be connected to the inlet portion **142** of the body portion **126** of the adapter **106** through the twist safe connection nipple **110.** In the illustrated embodiment, the twist safe connection nipple **110** is an intergal part of the adapter **106.** In an embodiment it is possible that the connection nipple **110** forms part of the inlet portion **142** of body portion **126** of the adapter **106** and is connected to the hose coupling forming the connecting end **146** of the hose **112.** However, in another example, the twist safe connection nipple **110** may be a non-integral part of the adapter **106.** Further, in an embodiment, the inlet portion **142** of the body portion **126** is an integral member of the adapter **106.** In another embodiment, the inlet portion **142** of the body portion **126** is a non-integral member of the adapter **106.**

FIG. **4** illustrates the cross sectional view of the adapter **106,** according to an embodiment of the present invention. In an embodiment, the adapter **106** is a one piece member used in the fluid dispensing system. The adapter **106** may embody the body portion **126** in a cylindrical shape. The adapter **106** may be made of a material such as, but not limited to, an elastomeric material, a plastic material, a metal, or a composite material or any other material which can provide a sealing connection with the hose **112** and the fluid outlet device **108** and a firm or fixed connection with the elongated member **102.**

In an embodiment, the inlet portion **142** of the body portion **126** of the adapter **106** is configured tangentially with an outer surface **148** of the body portion **126.** Thus, the fluid flow through the passage **144** reduces losses due to bends in the passage **144.**

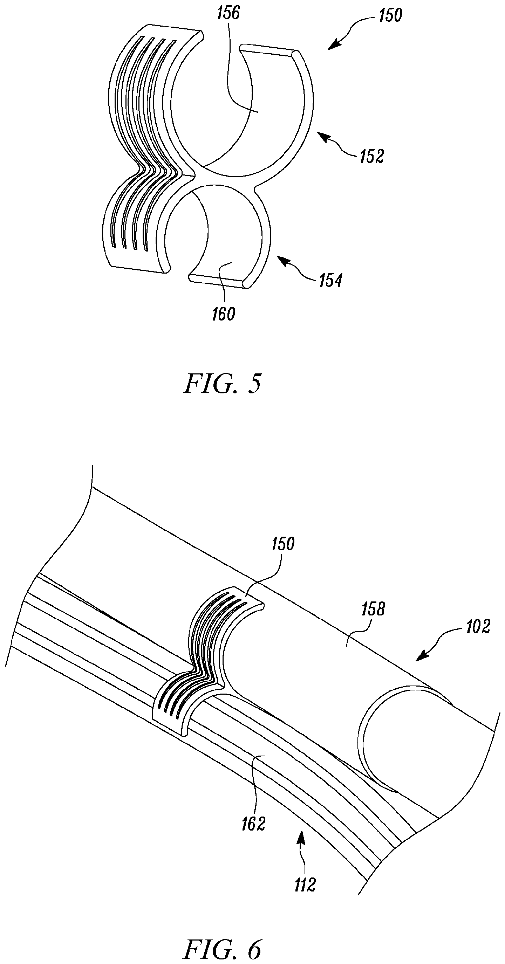

FIG. **5** illustrates a perspectivie of a clamp **150** according to an embodiment, of the present invention. The clamp **150** is adapted to secure the hose **112** with the elongated member **102.** The clamp **150** includes a first clamping portion **152** configured to detachably connect with the elongated member **102** of the fluid dispensing system **100.** The first clamping portion **152** is configured to hold the elongated member **102** (shown in FIG. **6**). The clamp **150** further includes a second clamping portion **154** disposed adjacent to the first clamping portion **152.** The second clamping portion **154** is configured to hold the hose **112** of the fluid dispensing system **100** (shown in FIG. **6**). The first clamping portion **152** is integrally connected to the second clamping portion **154** of the clamp **150.** In alternative examples, the first clamping portion **152** may be remobably connected to the second clamping portion **154** of the clamp **150.** The clamp **150** can be made of material such as but not limited to, an elastomeric material and a plastic material.

FIG. **6** illustrates an assembly of the clamp **150** with the hose **112** and the elongated member **102.** In an embodiment, an inner surface **156** of the first clamping portion **152** is configured to conform to an outer surface **158** of the elongated member **102.** The inner surface **156** of the first clamping portion **152** includes a convex shaped surface which is adapted to sungly fit over the outer surface **158** of the elongated member **102.** Also, an inner surface **160** of the second clamping portion **154** is configured to conform to an outer surface **162** of the hose **112.** The inner surface **160** of the second clamping portion **154** includes a covex shaped surface which is adapted to sungly fit over the outer surface **162** of the hose **112.**

FIG. **7** shows a perspective view of the clamp **116** shown in FIG. **5** for holding the fluid regulator valve **114** and the elongated member **102,** according to an embodiment of the present invention. In this exemplary embodiment, a clamp **116** includes a pair of first clamping portions **164** and an elongated second clamping portion **166.** The inner surface **168** of the pair of first clamping portions **164** is configured to conform to an outer surface **170** of the elongated member **102.** Further, the inner surface **172** of the elongated second clamping portion **166** is configured to conform to an outer surface **174** of the fluid regulator valve **114.**

In an embodiment, the clamp **116, 150** can be used in the fluid dispensing system **100** used in garden watering tools, painting tools, pesticide spraying tools and fertilizer spraying tools.

The adapter **106** for the fluid dispensing system **100** may find its applications other areas including, but not limited to irrigation, cleaning, spraying fertilizers, spraying pesticides, spraying herbicides, or another spraying operation known in the art.

The adapter **106** may provide advantage in connecting all sorts of handles, for example a combi-system handle which provides a quick connect feature and easy use to get an extension for the sprayers or nozzles.

The adapter **106** may also provide an advantage in connecting with combi-system telescopic handles. The combi-system telescopic handles may be used in watering balcony plantation up to about 5 m.

The adapter **106** may also provide advantage to the garden watering tool as the watering tool can be used from outside of vegetable patches or flowerbeds with pinpoint.

The fluid dispensing system **100** having the fluid outlet device **108** and the adapter **106** may find its application in cleaning gutters.

The fluid dispensing system **100** having the fluid outlet device **108** and the adapter **106** may find its application in cleaning the underbody of cars.

In the drawings and specification, there have been disclosed preferred embodiments and examples of the invention that is defined by the appended claims.

### PART LIST

- 100: Fluid dispensing system
- 102: Elongated member
- 104: Fluid supplying device
- 106: Adapter
- 108: Fluid outlet device
- 110: Twist safe connection nipple
- 112: Hose
- 114: Fluid regulator valve
- 116: Clamp
- 118: Sprayer head
- 120: Pulse trigger
- 122: Opening
- 124: First end
- 126: Body portion
- 128: Plurality of flat surfaces
- 130: Stepped portion
- 132: Stopper
- 134: Knob
- 136: Second end
- 138: Threads
- 140: Torsion stable connection
- 142: Inlet portion
- 144: Passage
- 146: Connecting end
- 148: Outer surface
- 150: Clamp
- 152: First clamping portion
- 154: Second clamping portion
- 156: Inner surface
- 158: Outer surface
- 160: Inner surface
- 162: Outer surface
- 164: Pair of first clamping portions
- 166: Elongated second clamping portion
- 168: Inner surface
- 170: Outer surface
- 172: Inner surface
- 174: Outer surface

## Claims

1. A fluid dispensing system (100) comprising:
a clamp (150) adapted to secure a hose to the fluid dispensing system,
the clamp **(116, 150)** comprising:
a first clamping portion (**152**) configured to detachably connect with an elongated member (**102**) of the fluid dispensing system (**100**), and
a second clamping portion (**154**) disposed adjacent to the first clamping portion (**152**), the second clamping portion (**154**) is configured to hold the hose (**112**) of the fluid dispensing system (**100**);
**characterized in that:**
the fluid dispensing system (100) comprises a fluid regulator valve (**114**) and a further clamp (**116**)
comprising a pair of first clamping portions (**164**) and an elongated second clamping portion (**166**),
wherein the inner surface (**168**) of the pair of first clamping portions (**164**) is configured to conform to an outer surface (**170**) of the elongated member (**102**) and wherein the inner surface (**172**) of the elongated second clamping portion (**166**) is configured to conform to an outer surface (**174**) of the fluid regulator valve (**114**).

2. Fluid dispensing system (100) of claim 1,
further comprising an adapter (106) comprising:
a body portion (126) comprising:
a first end (124) configured to be detachably coupled to the elongated
member (102) of the fluid dispensing system (100);
a second end (136) opposite to the first end (124), the second end (136) configured to be sealingly coupled to a fluid outlet device (108) of the fluid dispensing system (100);
wherein
the adapter (106) is a one piece member;
and the body portion (126) further includes:
at least one inlet portion (142) extending away from the body portion (126) and fluidly coupled with the body portion (126),
wherein the internal structure of the adapter defines a passage (144) extending from the inlet portion (142) to the second end (136) of the body portion (126); and
wherein the inlet portion (142) is configured to fluidly couple with the hose (112) of a fluid supplying device (104) for supplying fluid through the passage (144) to the fluid outlet device (108).

3. Fluid dispensing system (100) of claim 2, wherein the first end (124) of the body portion (126) is adapted to be substantially received within an opening (122) of the elongated member (102).

4. Fluid dispensing system (100) of claim 2 or 3, wherein the second end (136) of the body portion (126) adapted to sealingly couple with the fluid outlet device (108).

5. Fluid dispensing system (100) of any one of claims 2-4, wherein the inlet portion (142) of the adapter (106) is an integral member of the adapter (106).

6. Fluid dispensing system (100) of any one of claims 2-5, wherein the inlet portion (142) of the adapter (106) is a non-integral member of the adapter (106).

7. Fluid dispensing system (100) of any one of claims 2-6, wherein the second end (136) is configured to be sealingly coupled to a fluid outlet device (108) that is one of a fluid sprayer and a fluid nozzle.

8. Fluid dispensing system (100) of any one of the preceding claims, wherein the fluid dispensing system (100) is one of a garden watering tool, a painting tool, and a fertilizer spraying tool.

## Patentansprüche

1. Flüssigkeitsabgabesystem (**100**), umfassend:
eine Klemme (**150**), die geeignet ist, einen Schlauch an dem Flüssigkeitsabgabesystem zu befestigen, wobei die Klemme (**116, 150**) umfasst:
einen ersten Klemmabschnitt (**152**), der so konfiguriert ist, dass er lösbar mit einem länglichen Element (**102**) des Flüssigkeitsabgabesystems (**100**) verbunden ist,
und einen zweiten Klemmabschnitt (**154**), der neben dem ersten Klemmabschnitt (**152**) angeordnet ist,
wobei der zweite Klemmabschnitt (**154**) derart konfiguriert ist, dass er den Schlauch (**112**) des Flüssigkeitsabgabesystems (**100**) hält;
**dadurch gekennzeichnet, dass:**
das Flüssigkeitsabgabesystem (**100**) ein Flüssigkeitsregelventil (**114**) und eine weitere Klemme (**116**) umfasst,
umfassend ein Paar erster Klemmabschnitte (**164**) und einen länglichen zweiten Klemmabschnitt (**166**),
wobei die Innenfläche (**168**) des Paares erster Klemmabschnitte (**164**) konfiguriert ist,
um sich an eine Außenfläche (**170**) des länglichen Elements (**102**) anzupassen,
und wobei die Innenfläche (**172**) des länglichen zweiten Klemmabschnitts (**166**) derart konfiguriert ist, dass sie mit einer Außenfläche (**174**) des Flüssigkeitsregelventils (**114**) übereinstimmt.

2. Flüssigkeitsabgabesystem (**100**) nach Anspruch 1,
ferner umfassend einen Adapter (**106**), umfassend:
einen Körperabschnitt (**126**), umfassend:
ein erstes Ende (**124**), das konfiguriert ist, um lösbar mit dem länglichen Element (**102**) des Flüssigkeitsabgabesystems (**100**) gekoppelt zu werden;
ein zweites Ende (**136**) gegenüber dem ersten Ende (**124**), wobei das zweite Ende (**136**) so konfiguriert ist, dass es abdichtend mit einer Flüssigkeitsauslassvorrichtung (**108**) des Flüssigkeitsabgabesystems (**100**) gekoppelt ist;
wobei
der Adapter (**106**) ein einteiliges Element ist;
und der Körperabschnitt (**126**) ferner umfasst:
mindestens einen Einlassabschnitt (**142**), der sich von dem Körperabschnitt (**126**) weg erstreckt und mit dem Körperabschnitt (**126**) in Flüssigkeitsverbindung steht,
wobei die innere Struktur des Adapters einen Durchgang (**144**) definiert, der sich von dem Einlassabschnitt (**142**) zu dem zweiten Ende (**136**) des Körperabschnitts (**126**) erstreckt; und
wobei der Einlassabschnitt (**142**) so konfiguriert ist, dass er flüssigkeitsmäßig mit dem Schlauch (**112**) einer Flüssigkeitszufuhrvorrichtung (**104**) gekoppelt ist, um Flüssigkeit durch den Durchgang (**144**) zu der Flüssigkeitsauslassvorrichtung (**108**) zuzuführen.

3. Flüssigkeitsabgabesystem (**100**) nach Anspruch 2, wobei das erste Ende (**124**) des Körperabschnitts (**126**) angepasst ist, um im Wesentlichen in einer Öffnung (**122**) des länglichen Elements (**102**) aufgenommen zu werden.

4. Flüssigkeitsabgabesystem (**100**) nach Anspruch 2 oder 3, wobei das zweite Ende (**136**) des Körperabschnitts (**126**) angepasst ist, um abdichtend mit der Flüssigkeitsauslassvorrichtung (**108**) gekoppelt zu werden.

5. Flüssigkeitsabgabesystem (**100**) nach einem der Ansprüche 2 bis 4, wobei der Einlassabschnitt (**142**) des Adapters (106) ein integrales Element des Adapters (**106**) ist.

6. Flüssigkeitsabgabesystem (**100**) nach einem der Ansprüche 2 bis 5, wobei der Einlassabschnitt (**142**) des Adapters (**106**) ein nicht integrales Element des Adapters (**106**) ist.

7. Flüssigkeitsabgabesystem (**100**) nach einem der Ansprüche 2 bis 6, wobei das zweite Ende (**136**) so konfiguriert ist, dass es abdichtend mit einer Flüssigkeitsauslassvorrichtung (**108**) gekoppelt ist, die entweder ein Flüssigkeitszerstäuber oder eine Flüssigkeitsdüse ist.

8. Flüssigkeitsabgabesystem (**100**) nach einem der vorhergehenden Ansprüche, wobei das Flüssigkeitsabgabesystem (**100**) ein Gartenbewässerungsgerät, ein Malgerät oder ein Düngemittelsprühgerät ist.

## Revendications

1. Système de distribution de fluide (100) comprenant :
une pince (150) adaptée pour fixer un tuyau au système de distribution de fluide,
la pince (**116, 150**) comprenant :
une première partie de serrage (**152**) configurée pour se connecter de manière amovible à un élément allongé (**102**) du système de distribution de fluide (**100**), et
une seconde partie de serrage (**154**) disposée de manière adjacente à la première partie de serrage (**152**), la seconde partie de serrage (**154**) est configurée pour maintenir le tuyau (**112**) du système de distribution de fluide (**100**) ;
**caractérisé en ce que** :
le système de distribution de fluide (100) comprend une soupape de régulation de fluide (114) et une pince supplémentaire (116)
comprenant une paire de premières parties de serrage (**164**) et une seconde partie de serrage allongée (**166**),
où la surface intérieure (**168**) de la paire de premières parties de serrage (**164**) est configurée pour se conformer à une surface extérieure (**170**) de l'élément allongé (**102**) et
où la surface intérieure (**172**) de la seconde partie de serrage allongée (**166**) est configurée pour se conformer à une surface extérieure (**174**) de la soupape de régulation de fluide (**114**).

2. Système de distribution de fluide (100) selon la revendication 1,
comprenant en outre un adaptateur (106) comprenant :
une partie de corps (126) comprenant :
une première extrémité (124) configurée pour être couplée de manière amovible à l'élément allongé (102) du système de distribution de fluide (100) ;
une seconde extrémité (136) opposée à la première extrémité (124), la seconde extrémité (136) étant configurée pour être couplée de manière étanche à un dispositif de sortie de fluide (108) du système de distribution de fluide (100) ;
où
l'adaptateur (106) est un élément d'une seule pièce ;
et la partie de corps (126) comprend en outre :
au moins une partie d'entrée (142) s'étendant à l'écart de la partie de corps (126) et
couplée de manière fluide avec la partie de corps (126),
où la structure interne de l'adaptateur définit un passage (144) s'étendant de la partie d'entrée (142) à la seconde extrémité (136) de la partie de corps (126) ; et
où la partie d'entrée (142) est configurée pour se coupler de manière fluide avec le tuyau (112) d'un dispositif de fourniture de fluide (104) pour fournir du fluide à travers le passage (144) au dispositif de sortie de fluide (108).

3. Système de distribution de fluide (100) selon la revendication 2, où la première extrémité (124) de la partie de corps (126) est adaptée pour être substantiellement reçue dans une ouverture (122) de l'élément allongé (102).

4. Système de distribution de fluide (100) selon la revendication 2 ou 3, où la seconde extrémité (136) de la partie de corps (126) est adaptée pour se coupler de manière étanche avec le dispositif de sortie de fluide (108).

5. Système de distribution de fluide (100) selon l'une quelconque des revendications 2 à 4, où la partie d'entrée (142) de l'adaptateur (106) est un élément intégral de l'adaptateur (106).

6. Système de distribution de fluide (100) selon l'une quelconque des revendications 2 à 5, où la partie d'entrée (142) de l'adaptateur (106) est un élément non intégral de l'adaptateur (106).

7. Système de distribution de fluide (100) selon l'une quelconque des revendications 2 à 6, où la seconde extrémité (136) est configurée pour être couplée de manière étanche à un dispositif de sortie de fluide (108) qui est l'un d'un pulvérisateur de fluide et d'une buse de fluide.

8. Système de distribution de fluide (100) selon l'une quelconque des revendications précédentes, où le système de distribution de fluide (100) est l'un parmi un outil d'arrosage de jardin, un outil de peinture et un outil de pulvérisation d'engrais.
